Europäisches Patentamt

European Patent Office

Office européen des brevets

(11) Publication number: **0 521 616 A2**

# EUROPEAN PATENT APPLICATION

(21) Application number: **92305009.0**

(22) Date of filing: **01.06.92**

(51) Int. Cl.5: **G01B 11/00**

(30) Priority: **29.06.91 GB 9114206**

(43) Date of publication of application:
**07.01.93 Bulletin 93/01**

(84) Designated Contracting States:
**DE ES FR GB IT**

(71) Applicant: **LUCAS INDUSTRIES PUBLIC LIMITED COMPANY**
**Brueton House, New Road**

**Solihull, West Midlands B91 3TX(GB)**

(72) Inventor: **Sakai, Izumi**
**16, Baxters Road, Shirley**
**Solihull, West Midlands B90 2RU(GB)**

(74) Representative: **Robinson, John Stuart et al**
**Marks & Clerk Alpha Tower Suffolk Street**
**Oueensway**
**Birmingham, B1 1TT(GB)**

(54) **Displacement sensor.**

(57) A displacement sensor comprises a transducer arrangement (2-11) having sensing regions for sensing energy received from consecutive regions of an object, and moving means (16) for causing an image of the object to move cyclically with respect to the sensing regions. The sensing regions (4-11) are divided into first and second groups, adjacent sensing regions belonging to different groups. The outputs of the sensing regions in the first and second groups are summed to form first and second sums, respectively. The first and second sums are subtracted to form a difference signal. The phase of the difference signal is compared with the phase of the movement produced by the moving means (16) to provide a measurement of displacement.

FIG. I.

The present invention relates to a displacement sensor.

Although it is possible to use a spatial filter, for instance of the optical type, in order to sense or measure displacement, such arrangements have various disadvantages. Resolution is low and is limited by the pitch of the spatial filter. Where relative movement is slow, the time response of such a displacement sensor is slow. It is not possible to discriminate between forward and reverse displacement. Further, at slow relative speeds, the sensor signal is affected by low frequency noise.

According to the invention, there is provided a displacement sensor for sensing displacement with respect to an object, comprising a transducer arrangement having sensing regions arranged to be sensitive to an image of consecutive regions of the object, means for moving the sensing regions cyclically with respect to the image, and phase comparing means for comparing the phase of an output signal of the transducer arrangement with the phase of relative cyclical movement between the sensing regions and the image.

The transducer arrangement may be sensitive to electromagnetic radiation, such as microwaves, infra-red, or light, or may comprise ultrasonic transducers. In a preferred embodiment, the transducer arrangement comprises transducers of the optical spatial filtering type.

Preferably the transducer arrangement comprises transducers arranged as a one dimensional array. The array may be a linear array for sensing linear displacement or a curved array for sensing rotary or angular displacement. Processing means may be provided for forming the difference between the sum or weighted sum of the output signals of alternate transducers and the sum or weighted sum of the output signals of the remaining transducers.

The moving means may be arranged to produce relative reciprocating cyclical movement for sensing linear displacement or relative rotary movement for sensing rotary displacement. The moving means is preferably arranged to produce cyclical relative movement of constant speed for at least a portion of each cycle. The moving means may comprise an electromechanical actuator, such as a motor, solenoid, or piezoelectric transducer, driven by a signal generator. Alternatively, the moving means may comprise non-electromechanical means, such as a liquid crystal display providing a moving shutter or electronic scanning means for or forming part of the transducer arrangement. The signal generator may comprise a sawtooth generator. Alternatively the signal generator may be arranged to generate another waveform, such as triangular or sinusoidal, and means may be provided for enabling phase comparison by the phase comparing means during a substantially linear portion of the waveform produced by the signal generator. The phase comparing means may be arranged to compare the phase of the output signal of the processing means with the phase of the output signal of the signal generator.

It is thus possible to provide a displacement sensor of relatively high resolution. For instance, in the case of an arrangement using spatial filtering, the resolution can be made greater than the pitch of the spatial filter. A fast response time to displacement can be provided and discrimination between forward and reverse displacement is possible. Displacement can be measured at very low relative speeds and low frequency noise can effectively be reduced.

The present invention will be further described, by way of example, with reference to the accompanying drawings, in which:-

Figure 1 is a block schematic diagram of a displacement sensor constituting a first embodiment of the invention;

Figure 2 illustrates various waveforms occurring in the displacement sensor of Figure 1 with respect to a common time axis;

Figure 3 is a block schematic diagram of a displacement sensor constituting another embodiment of the invention;

Figures 4 and 5 illustrate possible waveforms which may occur within the displacement sensor of Figure 3; and

Figure 6 is a block schematic diagram of a displacement sensor constituting a further embodiment of the invention.

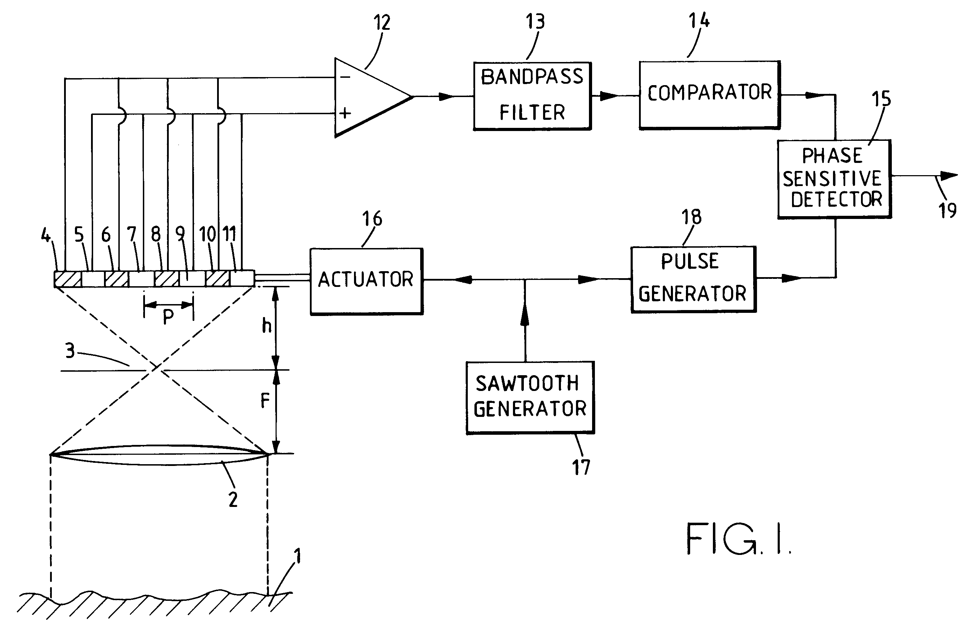

The displacement sensor shown in Figure 1 is suitable for mounting on a vehicle in order to measure displacement with respect to the ground 1. The sensor comprises an optical imaging system shown as a converging lens 2 with a slit 3 arranged at the prime focus thereof. A portion of the ground 1 below the optical system is imaged onto a linear array of opto-electric transducers 4 to 11, which form a spatial filter having a pitch P. The outputs of the transducers 4, 6, 8 and 10 are summed and supplied to the inverting input of a differential amplifier 12 whereas the outputs of the transducers 5, 7, 9 and 11 are summed and supplied to the non-inverting input of the amplifier 12. The output of the amplifier 12 is connected to the input of a band-pass filter 13, whose output is connected to the input of a comparator 14. The output of the comparator 14 is connected to a first input of a phase sensitive detector 15.

The array of transducers is mechanically linked to an electro-mechanical actuator 16, such as an electric motor or solenoid, which is arranged to move the array cyclically in its longitudinal direction relative to the lens system 2 and the slit 3.

Alternatively, the actuator 16 may move the slit 3, the lens 2, or any suitable combination of the slit, the lens, and the array, or an additional scanning component such as a prism or mirror. The actuator 16 is controlled by a sawtooth generator 17, whose output is also connected to a pulse generator 18. The output of the pulse generator 18 is connected to a second input of the phase sensitive detector 15.

The output signal I of the differential amplifier 12 may be expressed by the formula:

$$I = Io \cos (\phi_o + \phi)$$

where $\phi = 2\pi\alpha F_o x$, Io is a scale factor which is not always constant, $\alpha$ is a magnification factor h/F, Fo is the spatial frequency of the spatial filter and is equal to the reciprocal of the pitch P, x is displacement and $\phi_o$ is the initial phase. Because Io is not generally known, the signal I does not allow the displacement x to be determined directly.

In the displacement sensor of Figure 1, a carrier frequency $f_c = \alpha F_o v_c$ is introduced into the output of the differential amplifier 12 by cyclically reciprocating the array of transducers 4 to 11 at a relative speed $v_c$ in accordance with the sawtooth wave generated by the generator 17. The output of the differential amplifier 12 thus becomes:

$$I(t) = Io \cos (2\pi f_c t + \phi_o + \phi)$$

where t is time. The phase $\Phi = \phi_o + \phi$ provides a direct measure of displacement x and can readily be determined.

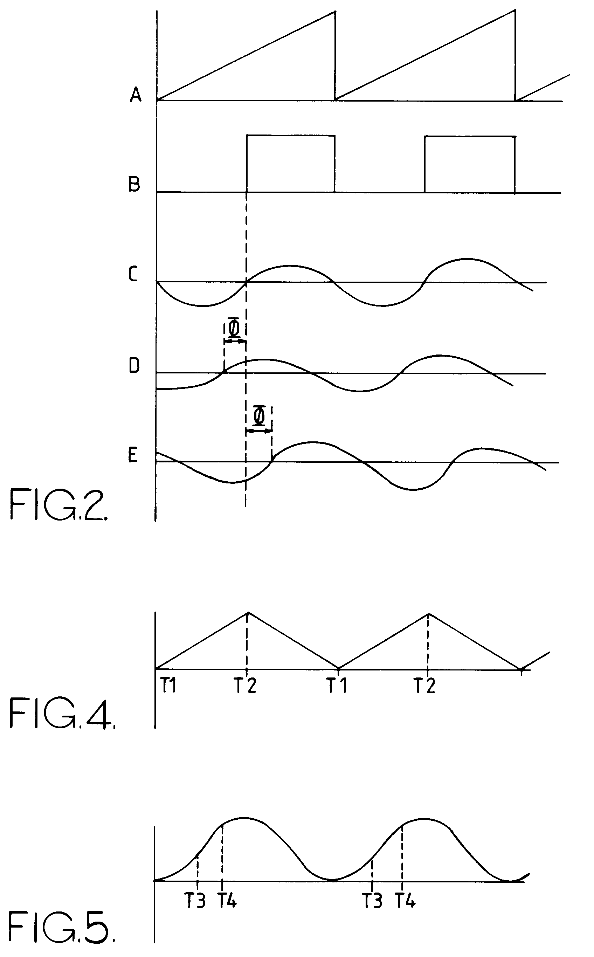

The sawtooth generator 17 and the actuator 16 produce a cyclical linear movement of the array of transducers so as to provide the carrier frequency which, apart from the "flyback" portion of the sawtooth waveform which portion is made as short as possible, causes the array to perform movement at constant speed in the same direction on a cyclical basis. The output of the sawtooth generator 17 is illustrated at A in Figure 2 and is also supplied to the pulse generator 18 which converts the sawtooth into a pulsed wave form, shown at B in Figure 2, of even mark/space ratio and in phase with the sawtooth at A. Alternatively, the pulse generator may supply regular pulses which are converted into a sawtooth waveform by the sawtooth generator. The pulsed waveform is supplied to the phase sensitive detector 15 as a reference signal.

The output of the differential amplifier 12 is filtered by the band pass filter 13 and converted to a rectangular or pulse wave by the comparator 14 before being supplied to the other input of the phase sensitive detector 15. The phase sensitive detector 15 provides at its output 19 a signal which is a function of the phase difference between the signals from the comparator 14 and the pulse generator 18 and which thus represents the displacement x between the displacement sensor and the ground 1.

It has been assumed that the amplitude of movement of the array is substantially equal to the pitch P of the array, so that the frequencies of the signals supplied to the phase sensitive detector are substantially the same. However, this is not essential. For instance, if the amplitude of movement is nP, where n is an integer greater than 1, the frequency of the signal supplied to the first input of the detector will be n times that of the signal supplied to the second input, but relative phase measurement, and hence displacement measurement, can still be performed.

Figure 2 shows at C the output signal of the differential amplifier 12 for zero displacement (x = 0). The waveform at C is substantially sinusoidal and for purposes of illustration, has zero phase shift with respect to the reference waveform at B. However, in practice, zero displacement may correspond to a predetermined non-zero phase shift, against which measurements may be compared to obtain the actual value of displacement.

The waveform at D illustrates the output of the amplifier 12 for a positive displacement (x>0). The waveform at D leads the reference waveform at B by a phase angle $\Phi$. The waveform at E shows the situation for reverse displacement (x<0), where the phase of the waveform at E lags behind that of the waveform at B by $\Phi$. Thus, the output of the phase sensitive detector 19 indicates both the magnitude and direction of the relative displacement x between the sensor and the ground.

The resolution of a displacement sensor of the type shown in Figure 1 with the transducers 4 to 11 stationary is limited to the pitch P of the spatial filter formed by the array of transducers. However, as is illustrated above, by causing the array to move cyclically at constant speed in a given direction, the resolution can be substantially improved and is not limited by the actual pitch P. Similarly, the response time for measuring displacement is not limited by the pitch P and the relative speed between the sensor and the ground 1, but is determined by the repetition rate of the cyclical movement of the array of transducers. Thus, within practical limits, the response time can be made as fast as is necessary for a specific application.

By measuring displacement repeatedly and measuring the time between displacement measurements, it is possible to determine the relative speed between the sensor and the ground 1. Thus, measurement of very slow relative speeds with great accuracy and resolution is possible, and such measurements may only be limited by the resolution and accuracy of the phase sensitive detector.

Further, this arrangement does not suffer from susceptibility to low frequency noise.

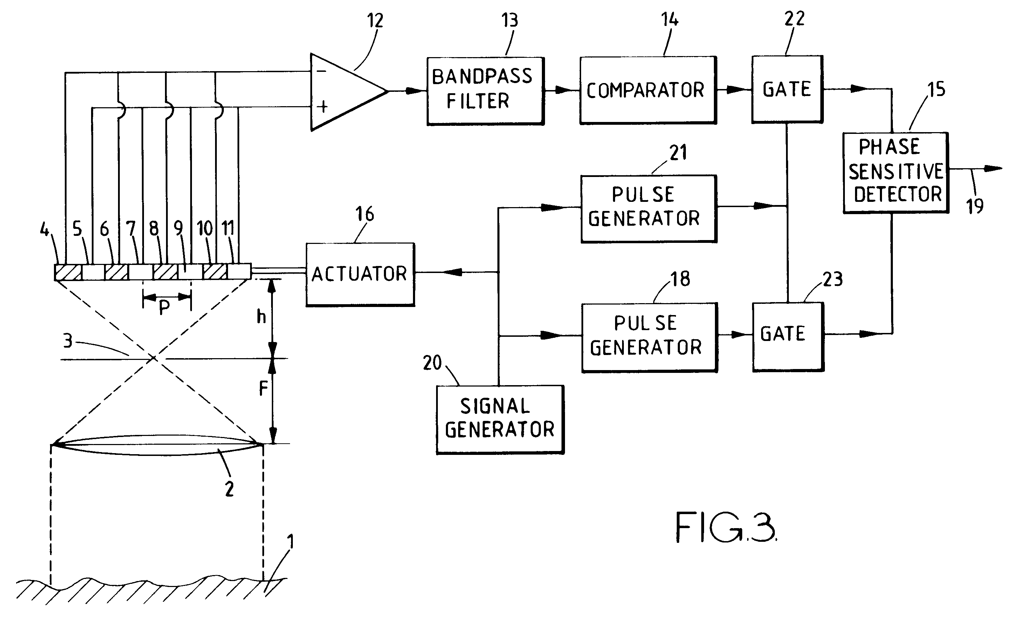

It is desirable to make the flyback time of the sawtooth movement of the array of transducers as short as possible. In practice, because of the finite driving force which may be applied to the array of transducers and the finite mass of the array, this flyback time cannot be reduced to zero. In order to avoid problems with finite flyback times and to allow other types of waveforms to be used, the displacement sensor shown in Figure 1 may be modified as shown in Figure 3. Like reference numerals refer to like parts which will not be further described.

The sawtooth generator 17 of Figure 1 is replaced by a signal generator 20 arranged to produce a cyclically repeating waveform. The output of the signal generator 20 is supplied to the actuator 16 and the pulse generator 18 and, in addition is supplied to a further pulse generator 21.

The output of the comparator 14 is connected to the input of a gate 22, whose output is connected to the first input of the phase sensitive detector 15. The output of the pulse generator 18 is connected to the input of a gate 23 whose output is connected to the second input of the detector 15. The output of the pulse generator 21 is connected to control inputs of the gates 22 and 23.

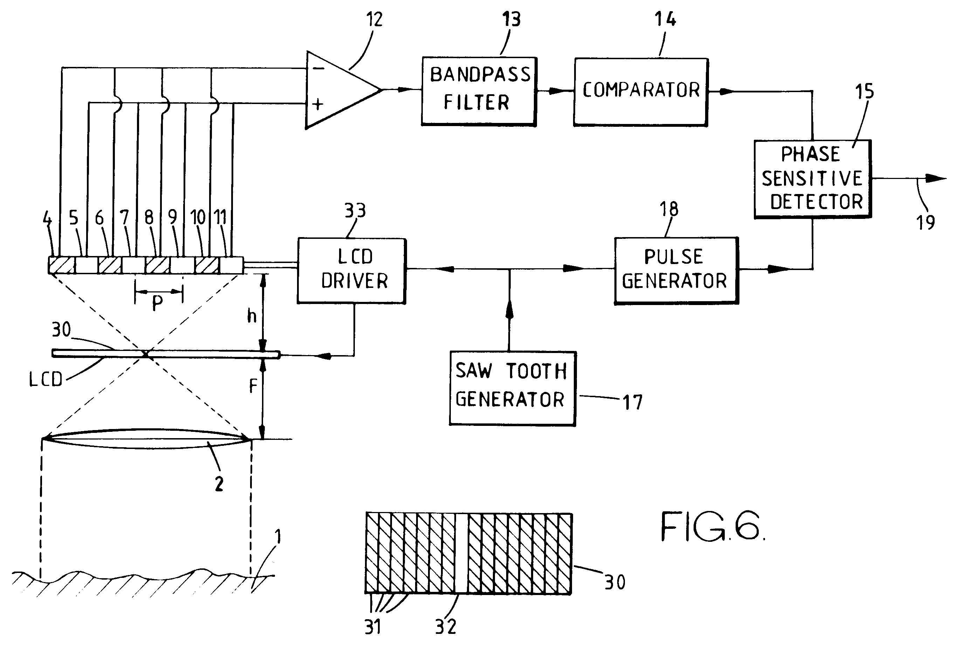

The signal generator 20 generates any waveform which has a portion during each cycle which is substantially linear and of substantially the same slope. Thus, in the case of a sawtooth generator in which the flyback time is relatively long, the portion of the waveform other than the flyback portion is required. Figure 4 illustrates a triangle waveform, which may be thought of as an extreme or limiting case of a saw tooth waveform. The portion of the waveform which is suitable for displacement measurement occurs between the times T1 and T2 of each cycle. Figure 5 illustrates a sinusoidal waveform having portions between times T3 and T4 of each cycle which are sufficiently linear for the purposes of displacement measurement.

The pulse generator 21 comprises a comparator arrangement having comparison thresholds set so as to define the portions of each cycle during which displacement measurement may be performed. Thus, the output of the pulse generator 21 opens the gates 22 and 23 during these portions of each cycle of movement of the transducer array so as to pass the signals from the comparator 14 and the pulse generator 18 to the phase sensitive detector 15.

The phase sensitive detector 15 in Figure 3 thus receives bursts of signals, and does not therefore provide a continuous output signal. However, this is not generally a problem, particularly for subsequent electronic processing circuitry which processes signal samples.

In the embodiment of Figure 1, in which an ideal sawtooth waveform is assumed, it is possible to provide phase continuity between consecutive cycles of the saw tooth waveform by arranging for the range of movement of the transducer array to be made equal to an integral multiple of the spatial filter pitch, that is:

$$\alpha v_c Ts = kP$$

where Ts is the period of the saw tooth waveform and k is an integer.

As shown in Figure 6, a liquid crystal device 30 can be used to form a moving slit to scan an image of the ground 1 over the transducers 4 to 11. The liquid crystal device 30 is divided into a plurality of elongate regions 31. The liquid crystal device 30 replaces the slit 3 of Figure 1, and is orientated such that the longitudinal axis of each region 31 is perpendicular to the direction of travel of the vehicle. A liquid crystal device driver 33 controls the device 30 in response to a signal, for example from a saw tooth generator 17, such that all except one of the regions 31 are opaque and that one region 32 is transparent. The position of the transparent region 32 is periodically altered so that the transparent region moves from one end on the device 30 to the other end thereof in phase with the saw tooth. It is thus possible to scan the image of the ground 1 across the transducers 4 to 11 in a stepwise approximation to a saw tooth without the problems of a non-zero flyback period associated with mechanical systems.

Various modification may be made within the scope of the invention. For instance, the opto-electric transducers 4 to 11 may be replaced with other electro-magnetically sensitive transducers, such as infra-red and microwave transducers. The optical system comprising the lens 2 and the slit 3 may be modified accordingly. Alternatively, ultrasonic transducers may be provided for receiving an ultrasonic image of consecutive regions of the ground or other object.

In order to measure rotary displacement, a curved transducer array may be provided. Although a rotary reciprocating spatial filter may be used, it is possible and, in general, preferable to use a radial filter rotating at constant speed to provide the cyclical movement.

## Claims

1. A displacement sensor for sensing displacement with respect to an object, comprising a transducer arrangement (2-11) having sensing regions (4-11) arranged to be sensitive to an image of consecutive regions of the object (1), characterised by moving means (16) for moving the sensing regions (4-11) cyclically with respect to the image, and phase comparing means (15) for comparing the phase of an output signal of the transducer arrangement (2-11) with the phase of the relative cyclical movement between the sensing regions and the image.

2. A displacement sensor as claimed in claim 1, characterised in that the moving means (16) is arranged to produce cyclical relative movement having substantially constant speed for at least a portion of each cycle.

3. A displacement sensor as claimed in claim 1 or 2, characterised in that the transducer arrangement comprises transducers (4-11) arranged in a one dimensional array.

4. A displacement sensor as claimed in claim 3, characterised by processing means (12) for forming the difference between the sum of output signals of alternate ones of the transducers (4,6,8,10) and the sum of the output signals of the remaining ones of the transducers (5,7,9,11).

5. A displacement sensor as claimed in any one of the preceding claims, characterised in that the moving means (16) is driven by a signal generator (17).

6. A displacement sensor as claimed in claim 5 when dependent on claim 4, characterised in that and the phase comparing means (15) is arranged to compare the phase of the output signal of the processing means (12) with the phase of the output signal of the signal generator.

7. A displacement sensor as claimed in claim 5 or 6, characterised in that the signal generator (17) is arranged to generate a waveform having a substantially linear portion, and characterised by enabling means for enabling phase comparison by the phase comparison means (15) during the substantially linear portion of the waveform.

8. A displacement sensor as claimed in any one of claims 5 to 7, characterised in that the signal generator (17) is arranged to generate a sawtooth wave.

9. A displacement sensor as claimed in any one of claims 5 to 7, characterised in that the signal generator (17) is arranged to generate a sinusoidal wave.

10. A displacement sensor as claimed in any one of claims 5 to 7, characterised in that the signal generator (17) is arranged to generate a triangle wave.

11. A displacement sensor as claimed in any one of the preceding claims, characterised in that the moving means (16) is arranged to move the sensing regions (4-11) in reciprocating linear cyclical movement relative to the image and the sensing regions (4-11) are arranged in a linear array.

12. A displacement sensor as claimed in any one of claims 1 to 10, characterised in that the moving means (16) is arranged to move the sensing regions (4-11) in cyclical rotary movement relative to the image and the sensing regions (4-11) are arranged in a curved array.

13. A displacement sensor as claimed in any one of the preceding claims, characterised in that the transducer arrangement is sensitive to electromagnetic radiation.

14. A displacement sensor as claimed in any one of the claims 1 to 12, characterised in that the transducer arrangement is sensitive to ultrasound.

15. A displacement sensor as claimed in any one of the preceding claims, characterised in that the moving means (16) comprises an electromechanical actuator.

16. A displacement sensor as claimed in any one of claims 1 to 14, characterised in that the moving means comprises means (30) for scanning the image over the sensing regions (4-11).

FIG. I.

FIG.2.

FIG.4.

FIG.5.

FIG.3

FIG.6.